# DEMANDE DE BREVET EUROPEEN

(11) **EP 0 851 249 A1**
(43) Date de publication de la demande: **01.07.1998**
(21) Numéro de dépôt: 97403179.1
(22) Date de dépôt: 30.12.1997
(51) Int. Cl.: G02B 6/245, G02B 6/25, G02B 6/38

(54) **Outil de raccordement d'une fibre à une autre fibre ou à un élément de connexion optique par l'intermédiaire d'un module de raccordement**

(30) Priorité: 30.12.1996 FR 9616188
(71) Demandeur: ALCATEL ALSTHOM COMPAGNIE GENERALE D'ELECTRICITE, 75008 Paris (FR)
(72) Inventeur: Vincent, Alain, 77230 Juilly (FR); Reslinger, Michel, 91070 Bondoufle (FR); Godard, Gérard, 93880 Noiseau (FR); Laurency, Philippe, 92700 Colombes (FR)
(74) Mandataire: Buffière, Michelle

(57) **Abrégé**

Outil pour le raccordement en bout d'une fibre à une autre fibre ou à un élément de connectique optique par l'intermédiaire d'un module qui comporte un boîtier récepteur permettant une introduction de fibre à au moins une extrémité et des moyens de fixation de fibre(s), par coincement en fond de boîtier, mis en oeuvre par enfoncement.

L'outil comporte des moyens (14, 14', 15, 16) permettant de réaliser successivement et éventuellement de manière simultanée pour deux fibres, un dénudage partiel de chaque fibre, un clivage d'extrémité pour raccordement en bout, un positionnement de chaque fibre clivée dans le module où elle se raccorde, et un sertissage de chaque fibre en position de raccordement dans le module, en un cycle commandé par rotation continue d'un arbre de commande rotatif (13) de l'outil, après mise en place manuelle de chaque fibre et du module en des positions déterminées sur l'outil.

## Description

L'invention concerne un outil destiné à assurer l'ensemble des opérations nécessaires au raccordement en bout d'une fibre, soit à une autre fibre, soit à un élément de connectique optique par l'intermédiaire d'un module de raccordement comportant un boîtier récepteur permettant une introduction de fibre à au moins une extrémité et des moyens de fixation de fibre(s) par coincement en fond de boîtier qui sont mis en oeuvre par enfoncement.

Comme il est connu le raccordement en bout d'une ou de deux fibres optiques implique la réalisation d'opérations délicates comprenant en particulier une mise en forme de l'extrémité de chaque fibre à raccorder en bout, un positionnement précis de la ou des extrémités pour assurer une continuité optique de qualité et une solidarisation de chaque fibre après un positionnement adéquat.

Il est aussi connu d'utiliser des modules de raccordement et notamment d'épissure permettant d'obtenir un positionnement précis des fibres à raccorder en bout et la solidarisation des fibres après positionnement.

Toutefois le raccordement de fibres à l'aide de tels modules ne dispense pas de réaliser les opérations préalables évoquées ci-dessus, même si éventuellement ces modules en facilitent certaines.

L'invention propose donc un outil de raccordement conçu pour permettre la réalisation de la suite d'opérations nécessaires au raccordement en bout d'une fibre à une autre fibre ou à un élément de connectique optique au moyen d'un module de raccordement à boîtier récepteur permettant une introduction de fibre à au moins une extrémité et à moyens de fixation de fibre(s) mis en oeuvre par enfoncement, l'outil étant destiné à assurer la suite de ces opérations en continu après un premier positionnement des fibres et du module de raccordement sur l'outil.

Selon une caractéristique de l'invention, cet outil comporte des moyens permettant de réaliser successivement et éventuellement de manière simultanée pour deux fibres, un dénudage partiel de chaque fibre, un clivage d'extrémité pour raccordement en bout, un positionnement de chaque fibre clivée dans le module où elle se raccorde, et un sertissage de chaque fibre en position de raccordement dans le module, en un cycle commandé par rotation continue de sens déterminé d'un arbre de commande rotatif comporté par l'outil, après mise en place manuelle de chaque fibre et du module en des positions déterminées sur l'outil.

L'invention, ses caractéristiques et ses avantages sont précisés dans la description qui suit en liaison avec les figures évoquées ci-dessous.

Les figures 1 à 4 présentent respectivement une vue de face en coupe, une vue de droite, une vue de gauche en coupe et une vue de dessus d'un boîtier récepteur d'un exemple de module de raccordement destiné à être installé au moyen d'un outil selon l'invention.

Les figures 5 à 8 présentent respectivement une vue de dessous, une vue de face en coupe, une vue de droite en coupe et une vue de gauche d'un élément immobilisateur du module objet des figures 1 à 4.

La figure 9 présente une première vue générale d'un outil de raccordement et notamment d'épissurage selon l'invention.

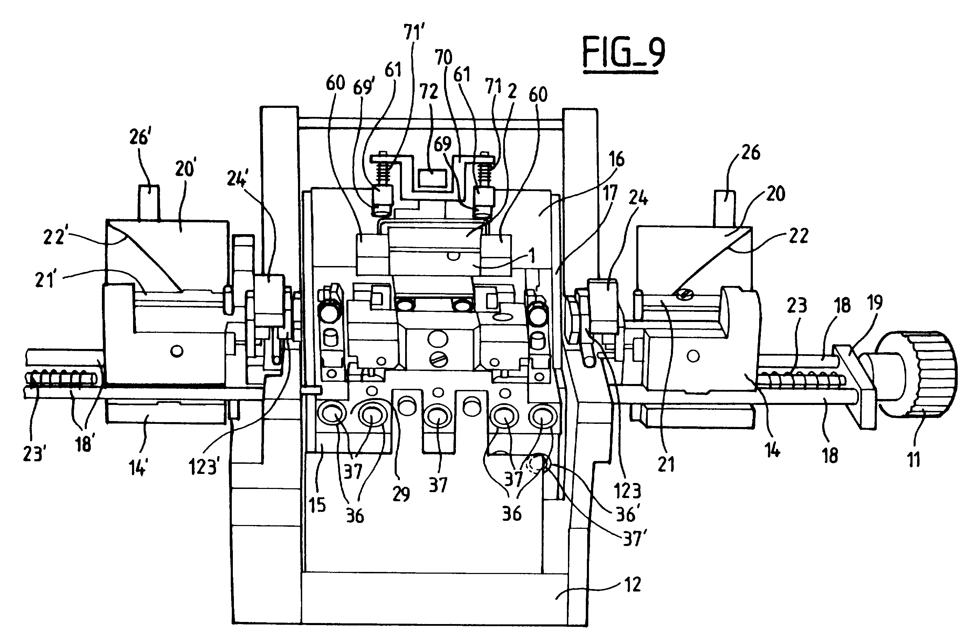

Les figures 9, 10, 11 présentent des vues légèrement différentes d'un outil selon l'invention vu de devant.

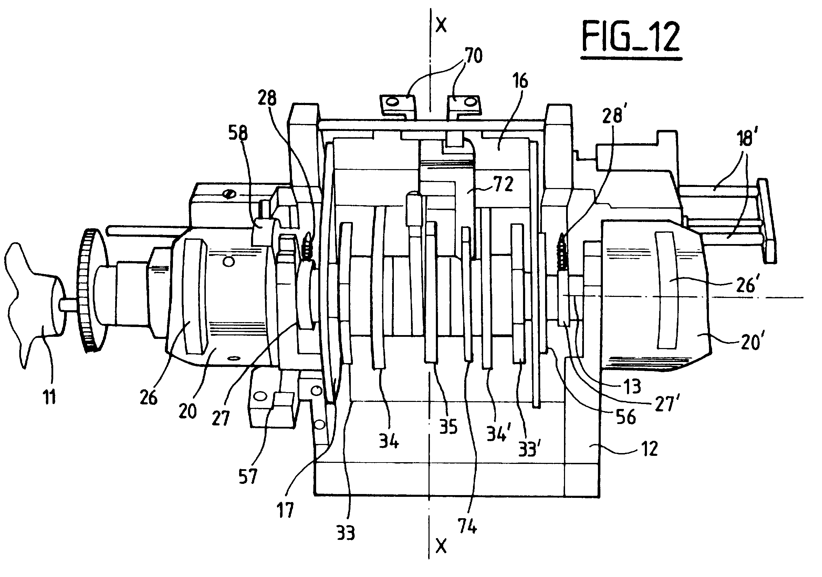

La figure 12 présente une vue arrière de l'outil selon l'invention.

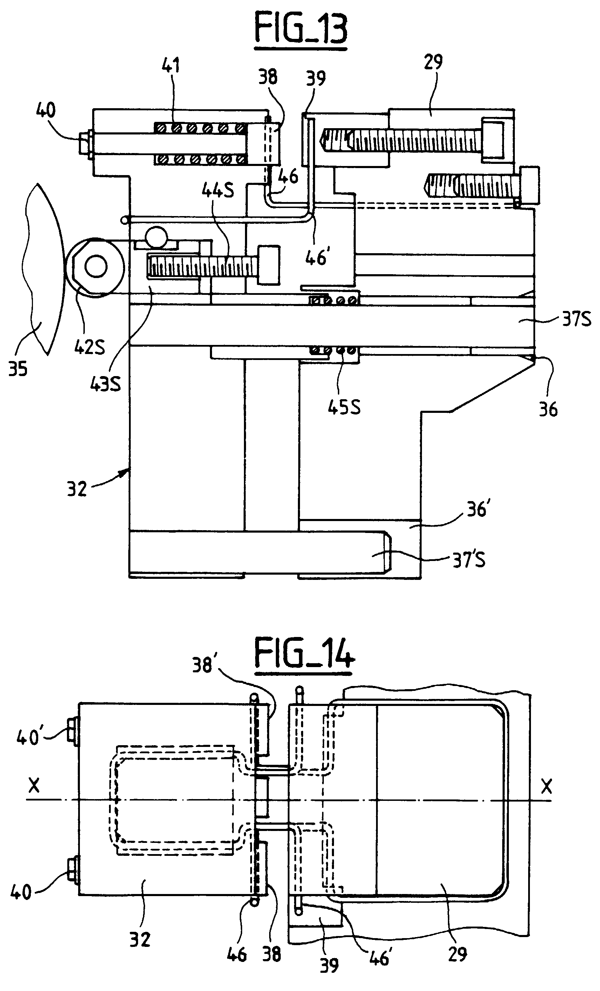

Les figures 13 et 14 présentent un agencement de serrage pour outil selon l'invention d'une part en vue de gauche et d'autre part en vue de dessus.

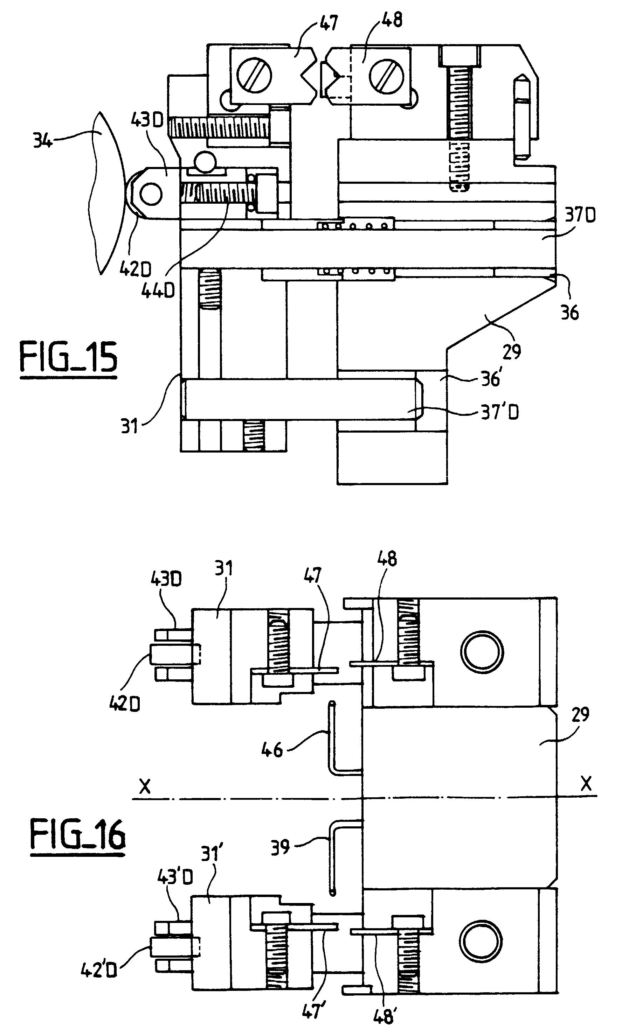

Les figures 15 et 16 présentent respectivement une vue de gauche d'un des agencements de dénudage pour outil selon l'invention et une vue de dessus montrant notamment les deux agencements de dénudage d'un outil selon l'invention.

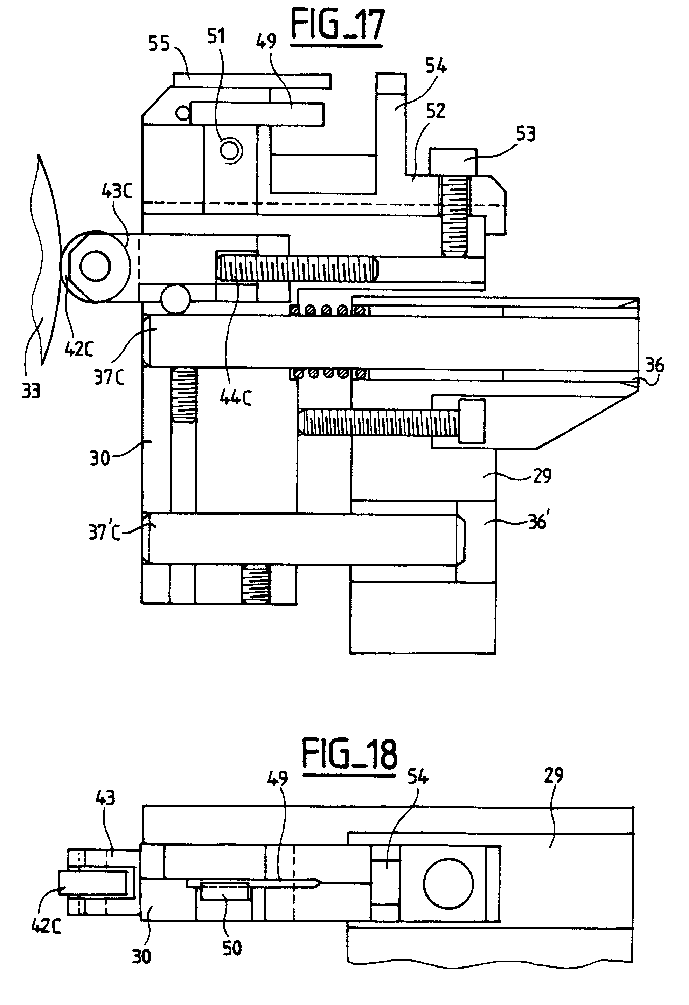

Les figures 17 et 18 présentent respectivement une vue de gauche d'un des agencements de clivage pour outil selon l'invention et une vue de dessus de cet agencement.

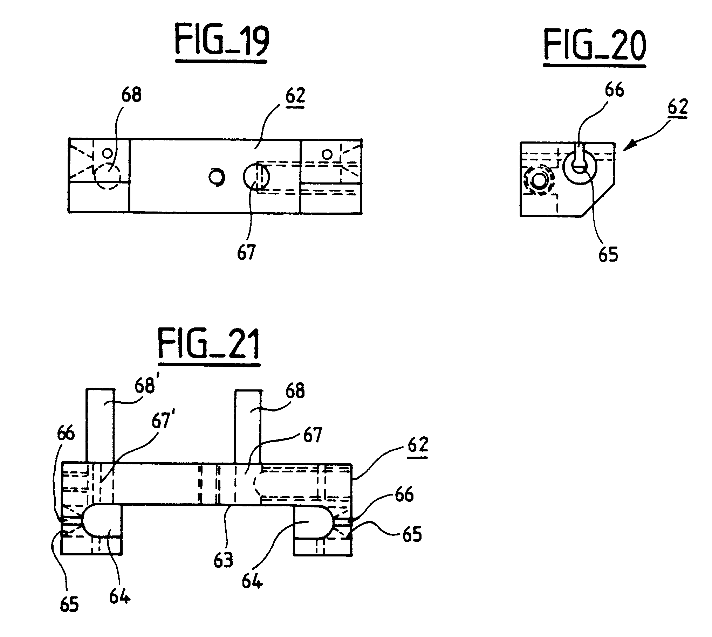

Les figures 19, 20, 21 présentent un exemple de porte-module pour outil selon l'invention respectivement en vue de face, de gauche et de dessous.

Comme indiqué plus haut, l'outil selon l'invention est destiné à permettre le raccordement en bout d'une fibre optique soit à une autre fibre optique, soit à un élément de connectique optique par l'intermédiaire d'un module de raccordement comportant un boîtier récepteur permettant une introduction de fibre à au moins une extrémité et des moyens de fixation de fibre(s) par coincement en fond de boîtier qui sont mis en oeuvre par enfoncement.

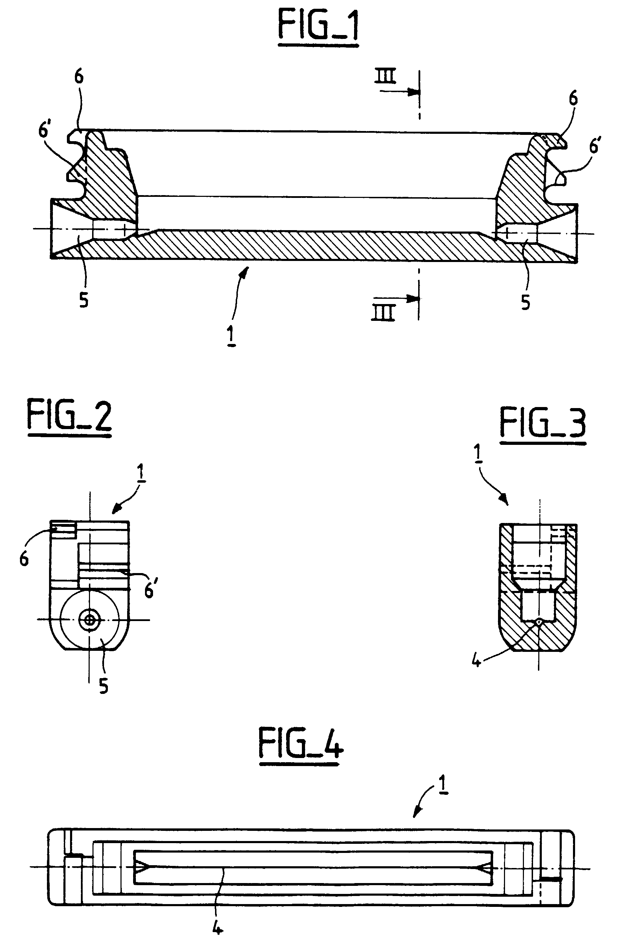

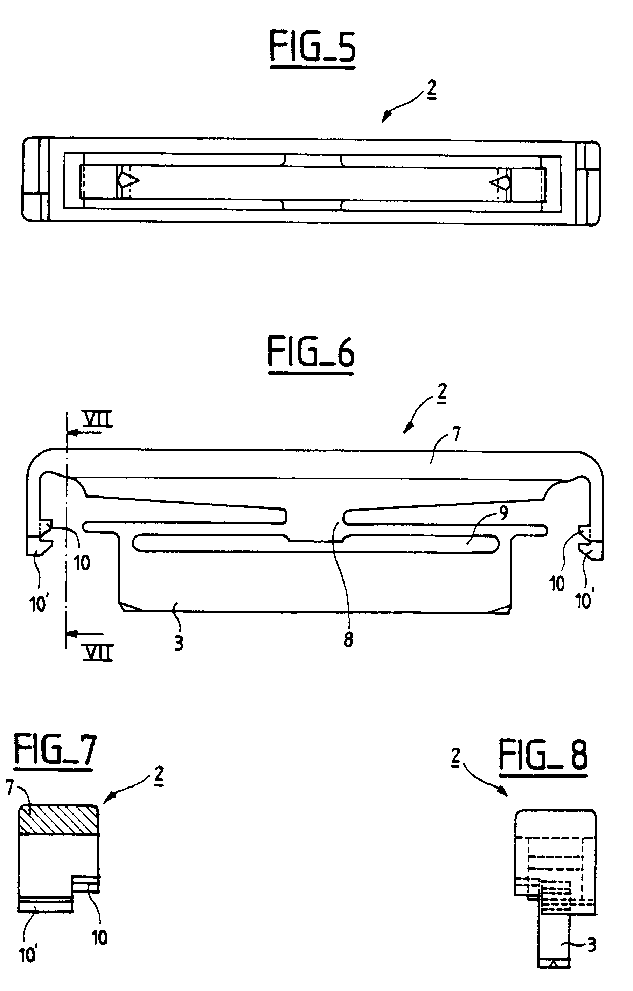

Les figures 1 à 8 présentent un exemple, non limitatif, de module de raccordement en bout, ici un module dit d'épissure pour deux fibres, avec son élément immobilisateur.

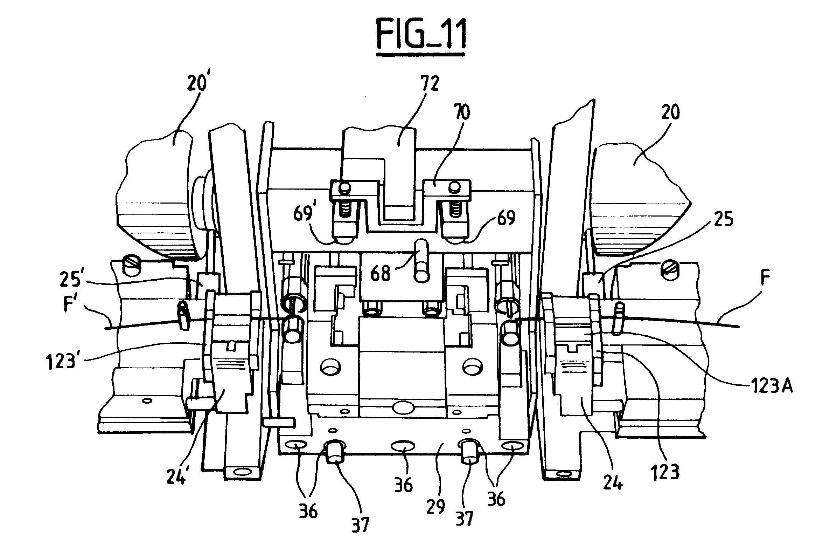

Ce module comporte à cet effet un boîtier récepteur 1 destiné à recevoir deux fibres et un élément immobilisateur 2 destiné à coopérer avec le boîtier récepteur 1 pour assurer le maintien en position des deux fibres optiques, telles F, F' esquissées en figure 11, après qu'elles aient été positionnées bout à bout de manière à assurer une continuité optique satisfaisante entre ces fibres.

Le boîtier récepteur 1 se présente sous la forme d'un boîtier en matériau moulé, tel que par exemple une résine thermoplastique, d'allure parallèlépipédique rectangle qui comporte une cavité longitudinale débouchante ouverte au niveau de l'une de ses grandes faces pour recevoir une partie 3 d'élément immobilisateur 2.

Le fond de la cavité que comporte le boîtier récepteur 1 est doté d'une rainure centrale 4 longitudinale destinée à recevoir deux fibres à raccorder en bout prévues pour pénétrer dans cette cavité par des orifices 5, disposés dans des parois latérales opposées du boîtier au niveau du fond de la cavité et chacun à une des extrémités de la rainure 4.

Chaque orifice 5, de part sa forme même ou éventuellement de part la forme d'un embout qu'il reçoit, s'évase vers l'extérieur du boîtier pour favoriser l'entrée d'une fibre et à un diamètre déterminé dans celle de ses parties qui se prolonge vers l'intérieur de la cavité pour centrer convenablement l'extrémité à raccorder d'une fibre de diamètre donné, le diamètre des orifices ou des embouts qu'ils contiennent éventuellement étant choisis en fonction de ceux des fibres à raccorder. Ces dernières sont prévues pour venir en butée l'une contre l'autre dans la partie médiane de la rainure longitudinale 4.

Le boîtier récepteur 1 comporte par ailleurs des moyens destinés à permettre à l'élément immobilisateur 2 de venir se fixer d'une part en une première position laissant une possibilité de libre passage aux fibres dans la rainure 4 entre le fond de cette rainure et l'élément immobilisateur 2, d'autre part dans une seconde position pour laquelle l'élément immobilisateur presse en fond de rainure 4 toute portion de fibre insérée entre cette rainure et lui-même.

Ces moyens sont ici transversalement disposés aux extrémités du boîtier à l'extérieur de ce dernier et ils sont constitués sous la forme de crans en saillie 6, 6' qui sont décalés d'une part en hauteur, d'autre part en largeur dans la réalisation présentée. Les crans 6 situés de part et d'autre du boîtier et à la même hauteur sont destinés à permettre un assujettissement de l'élément immobilisateur sur le boîtier récepteur dans la première des positions évoquées ci-dessus. Les crans 6' situés à un niveau plus bas que les crans 6 sont destinés à permettre le maintien de l'élément immobilisateur par rapport au boîtier récepteur dans la seconde des positions.

Dans la réalisation présentée, chaque cran 6 est plus étroit que le cran 6' au-dessus duquel il est situé et par rapport auquel il est latéralement décalé, ainsi qu'on le voit la figure 2.

L'élément immobilisateur 2 est par exemple réalisé dans la même matière que le boîtier récepteur 1, il comporte une partie 3 qui est ici destinée à être exploitée pour appliquer une pression de maintien en position sur les portions de fibre insérées via les orifices 5 entre la rainure 4 d'un boîtier récepteur 1 et elle-même, à partir du moment où l'élément immobilisateur 2 qui la comporte est poussé dans la seconde des positions mentionnées plus haut par rapport au boîtier récepteur 1 sur lequel il est positionné.

Dans la réalisation présentée, la partie pressante 3 a une forme qui est complémentaire de celle de la cavité du boîtier récepteur 1 qui la reçoit, soit ici une allure parallèlépipédique rectangle. Elle est fixée à un capot 7 qui vient fermer la cavité du boîtier récepteur 1 qu'il obture, lorsque l'élément immobilisateur 2 est en position. La liaison entre partie pressante 3 et capot 7 du même élément immobilisateur 2 est ici supposée assurée par un court pilier central 8 permettant élastiquement un jeu angulaire limité de la partie pressante par rapport au capot.

Une ouverture 9 s'étend sur la majeure partie de la longueur de la partie pressante 3, ici à proximité du pilier central 8, elle débouche latéralement de part et d'autre de cette partie pressante. Elle permet à la pression exercée par l'intermédiaire du dit pilier d'être appliquée à la partie pressante proprement dite au niveau de ses extrémités longitudinales. Une répartition optimale de pression est ainsi obtenue sur les portions de fibre immobilisées par la partie pressante au niveau de la rainure 4 dans le boîtier récepteur.

L'élément immobilisateur 2 comporte des moyens pour se fixer sur un boîtier récepteur 1 qui sont complémentaires de ceux que comporte ce dernier à cet effet.

Dans la réalisation présentée, les extrémités longitudinales du capot 7 comportent des pattes d'encliquetage dotées de crans 10, 10' respectivement destinés à coopérer avec les crans 6, 6' que le boîtier récepteur 1 comporte.

Les crans 10 , 10' orientés intérieurement sont donc eux aussi décalés d'une part sur deux niveaux en hauteur, d'autre part en largeur et les crans 10' qui sont les plus éloignés de la partie supérieure du capot 7 sont aussi plus larges que les crans 10, les uns et les autres ayant au moins approximativement même largeur que les crans 6 ou 6' avec lesquels ils sont susceptibles d'être respectivement amenés à coopérer.

Il est éventuellement envisageable d'effectuer directement le raccordement de deux fibres au moyen du module d'épissure décrit ci-dessus après avoir introduit séparément dans les orifices 5 du boîtier chacune de ces deux fibres, préalablement dénudées en extrémité sur une partie de leur longueur et clivées chacune de manière déterminée à cette extrémité.

Ceci implique un positionnement en bout réalisé d'une manière déterminée pour que les extrémités clivées viennent chacune dans la position prévue pour elle, avant immobilisation par action sur l'élément immobilisateur du module pour le faire passer de sa première à sa seconde position.

Pour réaliser ceci selon l'invention, il est prévu un outil de raccordement permettant d'assurer la réalisation de la suite d'opérations nécessaires au raccordement de manière continue et par une seule manipulation après un premier positionnement des fibres et du module d'épissure sur l'outil.

L'outil de raccordement présenté en figure 9 est un outil à commande manuelle rotative qui permet d'assurer l'ensemble des opérations de dénudage partiel des extrémités de fibre à raccorder, de mise en forme de ces extrémités par clivage, d'insertion des deux extrémités de fibres à raccorder en bout jusqu'à leur position de raccordement dans un module d'épissure et d'immobilisation mécanique de ces extrémités dans le module après raccordement de manière à former une épissure exploitable indépendante de l'outil, après un premier positionnement préliminaire des fibres et d'un module d'épissure sur l'outil.

La commande rotative est ici supposée réalisée par l'intermédiaire d'un organe tel que par exemple une molette 11. Cette dernière est ici située à une extrémité de l'outil et permet par une rotation continue d'un sens déterminé préférablement non inversable d'animer un ensemble de moyens chargés d'assurer les différentes opérations nécessaires au raccordement en un même et unique cycle.

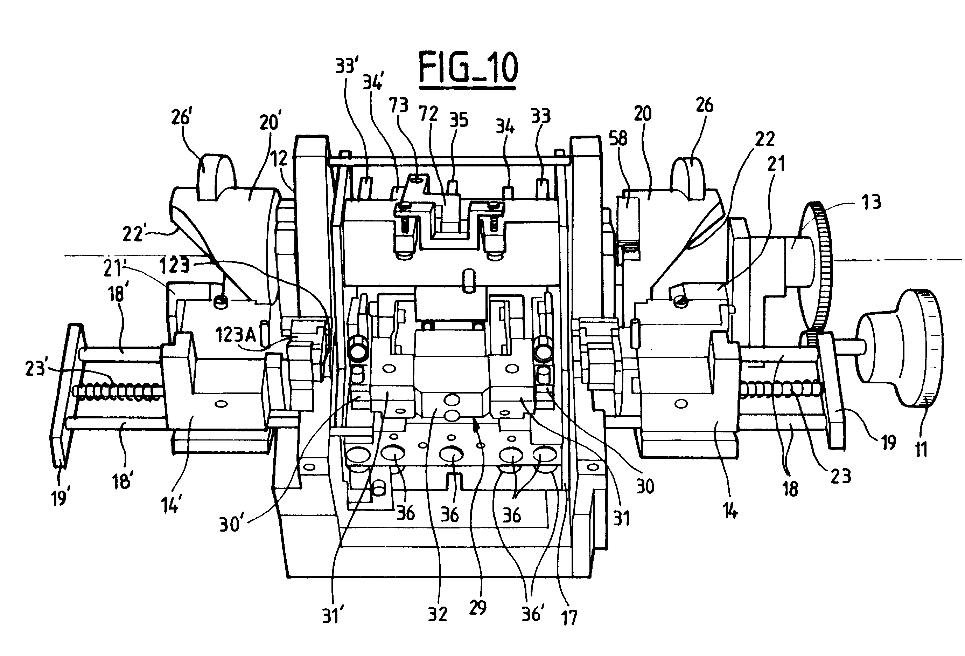

La molette 11 est montée rotative sur un bâti d'outil 12 et entraîne notamment un arbre 13 portant une pluralité de cames d'actionnement qui coopèrent avec d'autres éléments fonctionnels de l'outil d'une manière qui est précisée plus loin, - voir figures 10 et 12 -. La molette 11 actionne l'arbre 13 par un pignon de renvoi et une roue dentée, ainsi qu'esquissé dans la figure 10.

Selon une variante non représentée, l'entraînement en rotation de l'arbre 13 est susceptible d'être assuré par un moteur électrique couplé et commandé de manière appropriée selon des techniques connues de l'homme de métier.

Des moyens porteurs ici constitués par deux chariots porteurs de fibre 14, 14' coulissent en sens inverse de part et d'autre d'une partie centrale du bâti 12 où se logent d'une part un sous-ensemble 15 de moyens correspondant à des outils élémentaires de préparation des extrémités de fibres à raccorder en bout et d'autre part un sous-ensemble 16 de moyens permettant la mise en position, le maintien et la manoeuvre d'un module d'épissure tel qu'évoqué ci-dessus.

L'un et l'autre de ces deux sous-ensembles sont montés sur un berceau support 17 basculant dans le bâti 12 et qui est commandé par une des cames de manière à passer d'une première position, ici prévue haute, où les outils élémentaires évoqués ci-dessus sont actionnés pour permettre la préparation des extrémités des fibres à raccorder, à une seconde position, ici prévue basse, où ce sont des éléments fonctionnels du second sous-ensemble évoqué ci-dessus qui sont actionnés pour notamment permettre l'immobilisation des extrémités de fibre raccordées en bout dans un module d'épissure par manoeuvre de ce module permettant de faire passer son élément immobilisateur de sa première à sa seconde position. La came de basculement du berceau 17 est désignée par la référence 56 dans la figure 12.

Dans l'exemple de réalisation présenté, chacun des chariots porteurs 14, 14' coulisse sur deux tiges guides 18 ou 18' qui lui sont propres et qui sont fixées par une de leurs extrémités sur une pièce commune de solidarisation 19 ou 19' et sur le bâti 12 par l'autre.

Le coulissement des chariots porteurs 14, 14' est indirectement assuré par la rotation de la molette 11 et de l'arbre 13 qui entraîne à cet effet, deux cames individuelles 20, 20' d'allure cylindrique dite en cloche. Ces cames cylindriques 20, 20' fixées sur l'arbre 13 sont ici montées de part et d'autre du bâti 12. Chacune coopère avec un galet porté par un poussoir de rappel en position 21 ou 21' solidaire du chariot porteur 14 ou 14' situé du même côté du bâti 12 qu'elle. Chaque galet de poussoir 21 ou 21' vient prendre appui contre le bord 22 ou 22' de la came en cloche située du même côté que lui par rapport au bâti 12, cet appui est ici la conséquence de l'action compressive d'un ressort de rappel 23 ou 23', - voir figures 9 et 10 - situé entre le chariot porteur considéré et la pièce de solidarisation 19 ou 19' située à une des extrémités des tiges guides 18 ou 18' portant ce chariot.

Les bords 22, 22' respectifs de chacune des deux cames cylindriques 20, 20' sont symétriquement disposés par un plan transversal médian, de trace XX, de l'arbre 13 qui les porte, ils tendent à repousser symétriquement les deux chariots porteurs 14, 14' depuis une position initiale pour laquelle ces chariots sont proches du bâti 12 jusqu'à une position d'écartement maximal des dits chariots dans un déplacement parallèle aux tiges guides. Les ressorts 23, 23' repoussent les chariots vers le bâti 12 et entraînent chacun l'appui du galet du poussoir 21 ou 21' du chariot contre le bord 22 ou 22', profilé, de la came cylindrique 20 ou 20' correspondante. La rotation de l'arbre 13 entraînée par la molette 11 repousse le galet de chaque poussoir qui roule sur le bord 22 ou 22' en grande partie en pente de la came sur laquelle il s'appuie, ce bord étant ici supposé réalisé en bout de came et par exemple obtenu par découpe du cylindre initial de came selon un profil spécifique commun aux deux cames cylindriques 20, 20'. Ce profil détermine les positions successives des chariots par rapport au bâti 12 sur les tiges guides 18, 18' en fonction de la position angulaire de l'arbre 13 commandée par la molette 11. Chaque poussoir comporte une vis de réglage, non représentée, située à l'opposé du galet pour permettre de régler le positionnement de ce dernier par rapport au chariot qui le porte.

Chaque chariot porteur 14 ou 14' est agencé pour recevoir une des deux fibres à raccorder et comporte un dispositif porte-fibre 123 ou 123', monté mobile et articulé dans le chariot de manière à pouvoir partiellement tourner selon un axe ici supposé parallèle aux tiges guides. Chaque porte-fibre tel que 123 comporte une assise 123A, destinée à recevoir une fibre et à assurer un positionnement déterminé dans l'espace de l'axe longitudinal d'une extrémité de fibre reçue, et une bride de fixation 24 ou 24' venant immobiliser localement cette extrémité de fibre par une partie plane sur l'assise où cette bride articulée à l'une de ses extrémités vient s'accrocher par son autre extrémité, lorsqu'elle est manuellement manoeuvrée lors de la mise en place d'une extrémité de fibre pour raccordement.

Dans l'exemple de réalisation proposé, il est prévu que chaque fibre à raccorder vienne se placer sur l'assise du porte-fibre parallèlement aux tiges guides dans une zone plane de cette assise qui est entourée de part et d'autre par deux vés de positionnement de fibre et contre laquelle vient se plaquer une partie plane complémentaire de la bride, lorsque celle-ci est en position accrochée. Les deux vés de positionnement associés à une assise de porte-fibre sont alignés et définissent un axe de positionnement de fibre qui est aligné avec celui de l'autre porte-fibre et qui s'étend parallèlement aux tiges guides 18. Chaque assise de porte-fibre 123 ou 123' comporte un bras de mise en rotation 25 ou 25' visible sur la figure 11 qui est muni d'un galet à une extrémité de manière à venir prendre appui sur un élément en saillie latérale 26 ou 26' orientés vers l'extérieur de la came 20 ou 20' et à faire partiellement tourner dans un plan vertical le porte-fibre qui le comporte, comme déjà indiqué plus haut. Cette rotation partielle est ajustable, entre 0 et de l'ordre de 20°, de préférence entre 0 à 12° environ. Cette rotation non nulle du porte-fibre permet une coupe oblique de la fibre en place dans le porte fibre. La rotation nulle conduit à une coupe droite de la fibre en place.

Le décrochage de la bride 24 ou 24' de chaque porte-fibre 123 ou 123' est ici prévu commandé par l'intermédiaire d'une came 27 ou 27' et d'une tige à ressort 28 ou 28' pour chaque bride, cette tige venant en appui en bascule sur un talon de décrochage de la bride à laquelle elle est affectée en arrière de l'articulation de cette dernière sur son porte-fibre, lorsque cette tige et cette bride sont convenablement positionnées l'une par rapport l'autre en fin d'opération de raccordement comme précisé plus loin.

Le sous-ensemble 15 de moyens correspondant à des outils élémentaires de préparation des extrémités de fibres à raccorder en bout est porté par le berceau 17 basculant dans le bâti 12 et comporte un agencement 29, dit partagé, qui est monté fixe sur le berceau et qui porte cinq agencements référencés de 30, 30', 31, 31' et 32 - voir figure 10 - mobiles en translation parallèlement les uns aux autres sous l'action de cames plates référencées de 33, 33', 34, 34' et 35 portées par l'arbre 13, ainsi qu'on le voit sur la figure 12. Les agencements mobiles 30, 30' assurent chacun un clivage en bout d'une des différentes fibres à raccorder en coopération avec l'agencement partagé 29. Ce dernier participe aussi, d'une part, au dénudage partiel des fibres en coopération avec les agencements 31, 31' et, d'autre part, au serrage de ces fibres pour dénudage et clivage en coopération avec l'agencement 32. Ce dernier est placé en position centrale entre les agencements 31 et 31' eux-mêmes alignés avec les agencements 30 et 30' qui sont placés aux extrémités du sous-ensemble qui les regroupe tous. Tous ces agencements sont montés mobiles en translation transversalement à l'arbre 13 sur l'agencement partagé 29 qui les porte.

Dans la réalisation proposée, l'agencement partagé 29 est muni de guides cylindriques dont les orifices 36, 36' sont notamment visibles sur les figures 9, 10 et 11, ces orifices reçoivent des tiges de guidage 37, 37' prévues pour les agencements 30, 30', 31, 31' et 32. Dans l'exemple présenté, les tiges de guidage 37 ont une section transversale circulaire et coulissent dans des guides à section circulaire complémentaire, alors que les tiges 37' elles aussi à section circulaire coulissent dans des guides non circulaires offrant à la fois un guidage horizontal précis et un jeu dans le sens vertical.

Chacun des agencements précités se déplace sous l'action d'une des cames 33, 33', 34, 34' et 35 qui lui est propre et contre le bord périphérique du profilé de laquelle il prend appui par un poussoir à galet rotatif, analogue en son principe au poussoir de rappel 21 évoqué plus haut.

L'agencement de serrage 32 mobile, et la partie complémentaire de l'agencement partagé 29 sont présentés sur les figures 13 et 14, il comporte deux mors mobiles horizontalement 38, 38', symétriquement disposés par rapport au un plan transversal médian de trace XX évoqué plus haut et destinés à permettre chacun le serrage contre un mors fixe 39, commun, d'une des fibres à raccorder.

Dans la réalisation proposée, ce mors 39 saille dans un espace vide ménagé entre agencements 29 et 32 où saillent aussi les mors mobiles 38, 38'. Ces derniers sont montés sur des tiges 40, 40' munies de ressorts tel le ressort 41 qui leur permettent de venir se plaquer élastiquement contre le mors fixe 39, lorsque l'agencement 32 qui les porte est déplacé vers l'agencement partagé 29 par l'action de la came 35. A cet effet, l'agencement 32 prend appui sur le bord profilé qui se trouve à la périphérie de la came 35 par l'intermédiaire d'un galet 42S porté par un poussoir 43S à vis de réglage 44S maintenu dans un logement de forme complémentaire où ce poussoir peut ici se déplacer en translation sur une distance limitée. Le galet 42S se plaque contre la came 35, lorsqu'il a atteint en translation le fond de son logement, en raison de la pression antagoniste exercée par un ressort de rappel 45S monté entre les agencements 29 et 32 sur une tige de guidage 37S. En effet, l'agencement 32 coulisse vis-à-vis de l'agencement partagé 29 et comporte deux tiges de guidage 37S, 37'S qui coopère avec des guides cylindriques à orifices 36, 36' de l'agencement partagé 29, ces guides sont ici constitués comme ceux déjà évoqué en liaison avec l'agencement partagé 29.

Dans une forme préférée de réalisation, de fines tiges rigides 46, 46' de dégagement de fibre, ici supposées réalisées par pliage de deux fils métalliques fixés l'un sur l'agencement partagé 29 et l'autre sur l'agencement 32, sont positionnées de manière à venir couper la trajectoire suivie par une portion de fibre éventuellement restée plaquée contre un des mors après clivage, lorsque le serrage est supprimé par retour des mors mobiles 38, 38' à une position initiale pour laquelle ils sont éloignés du mors fixe 39. Ceci permet aux deux extrémités de chacune des tiges 46 et 46' qui se trouvent dans l'espace vide entre agencements 29 et 32 de décoller toute portion de fibre coupée restant plaquée contre l'un des mors, soit lorsque ces derniers se déplacent par rapport aux extrémités de tige 46 en ce qui concerne cette tige 46 fixée sur l'agencement partagé 29 et les mors mobiles 38, 38', soit par rapport auquel ces extrémités de tige 46' se déplacent en ce qui concerne le mors fixe 39 et la tige 46'.

Les agencements de dénudage 31 et 31', mobiles, et la partie complémentaire de l'agencement partagé 29 tels que présentés sur les figures 15 et 16, comportent des lames de dénudage complémentaires qui sont symétriquement disposées par rapport au un plan transversal médian de trace XX déjà évoqué plus haut, de même que les agencements 31 et 31'. Ces lames de dénudage référencées 47, 47' lorsqu'elles sont comportées par les agencements 31, 31' et référencées 48', 48' lorsqu'elles sont portées par l'agencement partagé 29 sont ici supposées planes et à bord de dénudage en forme de V ainsi qu'on le voit sur la figure 15. Elles sont ici positionnées de manière que le creux du V que chacune comporte soit ou vienne se placer transversalement pour recevoir une fibre destinée à être dénudée au long d'un axe défini pour ces fibres par les chariots porteurs 14, 14', lorsque les agencements 31 et 31' sont simultanément approchés de l'agencement partagé 29. Ces rapprochements s'effectuent sous les actions respectives des cames 34, 34' à profils identiques que porte l'arbre 13, ces cames agissant sur des poussoirs 43D, 43'D munis de galets 42D, 42'D, lorsque l'arbre tourne. Les éléments associés au poussoir 43D ou 43'D sont analogues à ceux associés au poussoir 43S. Ils sont désignés par les mêmes références numériques que dans les figures 13 et 14 et accompagnées par la lettre D. Chaque galet 42D ou 42'D suit le bord profilé de la came 34 ou 34' sur laquelle il vient en appui de manière à déplacer en translation l'agencement 31 ou 31' qui le comporte par rapport à l'agencement partagé 29 de manière à permettre une coopération temporaire des lames de dénudage de ces agencements rapprochés pour le dénudage de fibres, entre deux périodes où ces agencements sont éloignés de même que les lames de dénudage qu'ils portent.

Les agencements de clivage 30 et 30' sont symétriques et symétriquement situés par rapport au plan transversal médian de trace XX évoqué plus haut, chacun entre l'un des agencements de dénudage 31, 31' et un, différent, des deux côtés du berceau 17. Les figures 17 et 18 montrent les dispositions respectives de l'un d'entre eux, en l'occurrence l'agencement 30, et de la partie correspondante d'agencement partagé 29.

Chaque agencement de clivage comporte un diamant de coupe, tel le diamant 49 pour l'agencement de clivage 30, qu'il entraîne vers l'agencement partagé 29 lorsqu'il est déplacé vers ce dernier sous l'action de la came correspondante, ici 33, jusqu'à ce qu'il vienne couper l'axe de fibre défini par le porte-fibre correspondant, soit en l'occurrence le porte-fibre 123 et éventuellement la fibre à raccorder tenue par ce porte-fibre et par les mors, ici 38 et 39, de l'agencements de serrage 32 et de la partie complémentaire d'agencement partagé 29 entre lesquels cette fibre est alors immobilisée.

Chaque diamant est ici immobilisé par une pièce d'immobilisation, telle 50 fixée par une vis 51 sur un support 52 lui même positionné avec précision sur l'agencement de clivage qui le porte et sur lequel il est ici fixé par une vis 53. Des dispositions sont prises pour limiter les possibilités de contact avec l'extrémité libre et coupante de chaque diamant sauf pour la fibre à cliver, tel est notamment l'objet de l'élément de protection 54 situé en face de l'extrémité coupante du diamant 49 sur les figures 17 et 18. Il est aussi prévu une plaque de protection additionnelle 55 non représentée sur la figure 18 qui vient se placer latéralement par rapport au diamant sur le support correspondant ainsi qu'on le voit sur la figure 17.

Les déplacements simultanés des agencements de clivage par rapport à l'agencement partagé 29 sont respectivement commandés par la came 33 (respectivement 33') d'une manière qui correspond dans son principe à celle prévue pour les agencements de dénudage, les profils actifs des cames de clivage étant bien entendu différents de ceux des cames de dénudage 34, 34' dans la mesure où les opérations à effectuer sont différentes.

Dans le cas présent l'opération à réaliser est que chaque diamant vienne frapper latéralement la fibre maintenue tendue entre le dispositif porte-fibre 123 ou 123' le plus proche et les mors de serrage 39 et 38 ou 38' situés au centre de l'outil pour assurer le clivage de cette fibre.

A cet effet, chaque agencement de clivage comporte un poussoir muni d'un galet prenant appui sur , tel le poussoir 43C muni d'un galet 42C que l'on voit sur les figures 17 et 18.

Les poussoirs sont montés sur les agencements de clivage qui les comportent d'une manière correspondant au moins approximativement à celles prévues pour les poussoirs 43D ou 43S que comportent respectivement les agencement 31, 31' et 32.

Comme indiqué plus haut, en regard des figures 9 à 12 les sous-ensembles 15 et 16 sont montés sur un berceau 17 basculant dans le bâti 12 autour de l'arbre 13 par rapport auquel ce berceau tourne. Les basculements du berceau 17 sont commandés par une came 56 ici située entre la came 20' et le berceau 17 sur l'arbre 13 qui les porte. A cet effet, il est prévu un bras non représenté articulé sur le bâti 12, dont l'une des extrémités vient prendre appui sur le profil de la came 56 par l'intermédiaire d'un galet non représenté, l'autre extrémité est assujettie au berceau.

Le berceau 17 est mécaniquement maintenu en position haute pendant une première partie de la rotation de la came 56 en raison du profil du bord de cette dernière pour permettre la préparation des fibres par les outils comportés par le sous-ensemble 15, avant raccordement.

Le basculement du berceau 17 en position basse s'effectue ici par gravité, dès que le profil de la came 56 l'autorise en permettant au galet que porte le bras de se rapprocher de l'axe de l'arbre 13 pendant une seconde partie de la rotation de cette came 56.

Dans une forme de réalisation, le passage du berceau 17 de position haute en position basse sous l'effet de la gravité est freiné par le frottement d'une pièce de freinage 57, solidaire du bâti 12, contre une surépaisseur 58, profilée de manière progressive, que comporte la came cylindrique 20 à proximité du bâti, cette pièce et cette surépaisseur étant partiellement présentées sur la figure 12. La surépaisseur 58, également représentée sur la figure 10, est ici supposée recouverte par un élément de revêtement à effet anti-dérapant favorisant le freinage.

Le basculement en position basse du berceau amène le positionnement du sous-ensemble 16 au niveau des fibres tel que défini par les dispositifs porte-fibres 123 et 123', en simultané avec le mouvement vers le bas du sous-ensemble 15 préalablement situé à ce niveau.

Le sous-ensemble 16 comporte essentiellement un élément support correspondant à la partie référencée 16 sur la figure 9. Cet élément support est fixé en partie supérieure de berceau 17 et reçoit un porte-module d'épissure 60 préférablement amovible qui accueille et positionne un module de raccordement tel que décrit plus haut.

En raison de l'amovibilité de ce porte-module, il est possible d'accueillir d'autres modules que celui décrit plus haut à l'aide de porte-modules compatibles avec l'élément support que comporte le sous-ensemble 16, ces porte-modules étant adaptés pour permettre l'utilisation des modules alors prévus, comme développé plus loin.

L'élément support du sous-ensemble 16 reçoit aussi un dispositif de sertissage à poussoirs 61 positionné au-dessus du porte-module 60 lorsque celui-ci est en place.

Dans une forme de réalisation, le porte-module 60 comporte une pièce réceptrice métallique 62 présentée de manière détaillée sur les figures 19, 20 et 21. Cette pièce réceptrice comporte un logement longitudinal lui permettant de recevoir un module d'épissure constitué d'un boîtier récepteur 1 et d'un élément immobilisateur 2. Ce logement est ici délimité par une paroi lisse 63 contre laquelle vient se positionner le module et par deux cavités d'extrémité 64 qui reçoivent chacune une extrémité de module, ce dernier venant se positionner précisément dans ces cavités où il s'introduit en coulissant le long de la paroi lisse de manière à venir en butée au fond de ces cavités.

Deux orifices 65 sont symétriquement ménagés chacun à une extrémité d'une cavité de manière à déboucher à l'extérieur de la pièce aux extrémités de cette dernière et à permettre en conséquence l'introduction d'une fibre chacun jusqu'à l'intérieur du boîtier récepteur 1 d'un module, via un des orifices 5 de ce boîtier récepteur.

Dans la réalisation envisagée, ces orifices 65 qui ont préférablement une entrée s'évasant vers l'extérieur pour faciliter l'introduction de fibre, sont aussi latéralement ouverts chacun par une fente longitudinale 66 qui débouche à l'extérieur dans une direction opposée à celle d'introduction d'un module dans une pièce réceptrice 62 de porte-module 60. Ces fentes 66 permettent le passage des deux fibres reliées à un module assemblé lorsque le module est dissocié de la pièce réceptrice 62, après raccordement des fibres.

Dans la réalisation envisagée, la pièce réceptrice 62 vient se fixer contre une paroi avant de l'élément support du sous-ensemble 16 de manière à être amovible, deux conduits 67 et 67' sont prévus dans la pièce réceptrice 62 pour recevoir deux tiges 68 et 68' de positionnement de cette pièce réceptrice 62 en paroi avant dans des conduits correspondants, non représentés. dans une forme préférée de réalisation, au moins l'une des tiges 68, 68' et l'un des conduits sont agencés de manière connue de l'homme de métier pour assurer un encliquetage permettant d'immobiliser la pièce réceptrice 62 amovible contre la paroi avant de l'élément support contre laquelle elle a été poussée et de la retirer manuellement en cas de besoin. Ceci peut notamment permettre de remplacer la pièce réceptrice 62 évoquée ci-dessus par une pièce similaire prévue pour un autre module d'épissure pour deux fibres ou encore pour un module prévu pour raccorder une fibre à un autre élément, par exemple un embout de connectique optique.

Le dispositif de sertissage à poussoirs comporte ici deux poussoirs 61 figure 9 qui sont positionnés au-dessus du porte-module 60 sur la paroi avant de l'élément support du sous-ensemble 16 et plus particulièrement en regard des extrémités longitudinales d'un élément immobilisateur 2 d'un module d'épissure en place dans le porte-module 60 de manière à pouvoir venir presser sur ces extrémités. Chacun de ces poussoirs comporte ici un élément d'appui 69 ou 69' solidaire d'une tige qui coulisse dans un orifice ménagé pour elle dans une extrémité d'un étrier support 70, ici en U ainsi qu'on le voit notamment sur la figure 9.

Ces deux tiges sont maintenues sur l'étrier 70 de manière connue de l'homme de métier pour coulisser par rapport à cet étrier sans pouvoir s'échapper et sont associés à des ressorts de rappel 71, 71'. L'étrier 70 est actionné par une première extrémité d'un bras mobile 72 - voir figures 9 à 12 - qui est articulé sur l'élément support du sous-ensemble 16 et qui porte un galet 73 à son autre extrémité, ce galet 73 prend appui sur le bord périphérique d'une came 74, ici plane, portée par l'arbre 13. Le profil de la came 74 est réalisé de manière connue de l'homme de métier de manière que la rotation de l'arbre 13 en fin de cycle entraîne successivement le sertissage des fibres dans le module d'épissure en raison de l'appui simultané des poussoirs 69 et 69' sur les extrémités de l'élément immobilisateur 2 d'un module d'épissure en place dans la pièce réceptrice 62 du porte-module et ultérieurement le retour en position initial des poussoirs pour le retrait du module d'épissure relié aux deux fibres raccordées entre elles par son intermédiaire.

Bien entendu le processus est analogue si notamment la pièce réceptrice et éventuellement le et/ou les poussoirs et/ou éventuellement l'étrier sont différents de celui présenté dans la mesure où ces éléments sont alors destinés à un module d'épissure ou de raccordement différent de celui présenté ici à titre d'exemple non limitatif.

La réalisation d'une épissure entre deux fibres au moyen de l'outillage succinctement décrit précédemment, notamment au moyen d'un module d'épissure composé d'un boîtier récepteur 1 et d'un élément immobilisateur 2 tels qu'évoqués plus haut impliquent la réalisation successive des opérations décrites ci-après.

Comme déjà indiqué précédemment, l'outil de raccordement est conçu pour permettre la réalisation de la suite d'opérations nécessaires au raccordement en un seul cycle de rotation de l'arbre 13, par l'intermédiaire de la molette, permettant d'animer les éléments fonctionnels mobiles de l'outil mis à part un premier positionnement des fibres et du module d'épissure sur l'outil.

A cet effet, il est initialement prévu de placer un module d'épissure dans la pièce réceptrice 62 d'un porte-module soit déjà en place sur l'outil de raccordement qui le comporte, soit éventuellement avant positionnement de la pièce réceptrice 62 sur cet outil, alors que la molette de manoeuvre 11 a été placée dans une position initiale qui seule permet le démarrage d'un cycle de raccordement de fibre(s). Le berceau est alors dans sa position haute pour laquelle le sous-ensemble 15 est au niveau des fibres alors que le sous-ensemble 16 est au-dessus.

Il est prévu de venir placer à ce stade les fibres à raccorder - ou éventuellement la seule fibre à raccorder -, par l'intermédiaire du module sur l'assise d'un porte-fibre 123 ou 123' avec une extrémité libre de la ou des fibres venant se positionner au niveau des mors de serrage situés au centre de l'outil entre lesquels l'extrémité considérée sera ultérieurement immobilisée.

Chaque fibre est alors positionnée manuellement de la manière indiquée ci-dessus par l'opérateur qui manipule l'outil, cette fibre passant alors au fond des vés de positionnement entourant l'assise du porte-fibre 123 ou 123' qui la reçoit, avant d'être immobilisée par le rabattement et l'accrochage, ici supposé manuel, de la bride 24 ou 24' associée à ce porte-fibre.

La mise en rotation de la molette de manoeuvre 11 dans le sens seul autorisé par un mécanisme non représenté, de type roue libre, entraîne dans une première phase le déplacement simultané des lames de dénudage 47 et 47' qui se rapprochent alors l'une de la lame de dénudage 48 et l'autre de 48' de manière à venir au contact avec les fibres respectivement positionnées l'une entre les lames 47 et 48 et l'autre entre les lames 47', 48'. Simultanément s'effectue un écartement des chariots porteurs de fibre 14, 14' par rapport à la partie centrale du bâti 12 et en conséquence des déplacements en sens inverse de chacune des fibres qui frottent l'une contre les lames 47, 48 et l'autre contre les lames 47', 48' ce qui assure un dénudage de ces fibres dans la zone de frottement.

La poursuite de la rotation de la molette 11 et de celle de l'arbre 13 qui en découle entraînent dans une seconde phase le retrait simultané des agencements 31 et 31' et donc celui des lames de dénudage 47, 47' en raison de l'allure des profils correspondants des cames 34, 34' sur lesquels s'appuient les galets de ces agencements. Simultanément ou quasi-simultanément les mouvements d'écartement respectifs des chariots porteurs de fibre 14, 14' sont arrêtés en raison de l'allure des profils 22, 22' correspondants des cames cylindriques 20, 20'. Ces arrêts sont immédiatement suivis du serrage simultané de chacune des fibres suite au rapprochement simultané des mors 38, 38' par rapport au mors 39 en raison des mouvements de l'agencement de serrage mobile 32 par rapport à l'agencement partagé 29 sous l'action de la came 35, entraînée par l'arbre 13.

La poursuite de la rotation de l'arbre 13 sous l'action de la molette 11 entraîne une troisième phase durant laquelle sont réalisées:
- une mise sous tension de la portion de chaque fibre qui est située entre un dispositif porte-fibre 123 ou 123' et les mors 39 et 38 ou 38' et qui est tenue par ceux-ci;
- une torsion de chacune de ces portions de fibre respectivement soumises chacune à la rotation partielle du dispositif porte-fibre où elle est temporairement tenue.

A cet effet, la rotation des cames 20 et 20' portées par l'arbre 13 entraîne simultanément:
- la poursuite de l'écartement des chariots porteurs 14, 14' et donc des dispositifs porte-fibre vis-à-vis du bâti et en conséquence de l'agencement de serrage 32 qui comporte les mors 38, 38' et 39;
- la rotation partielle de chacun des porte-fibres 123, 123' sous l'action de l'élément en saillie 26 ou 26' de la came 20 ou 20' en rotation qui commande ses déplacements.

Une quatrième phase entraînée comme les précédentes par la rotation de l'arbre 13 sous l'action de la molette 11 commande le clivage de chacune des fibres par l'un des diamants de coupe venant latéralement frapper cette fibre par suite du mouvement de translation de l'agencement de clivage 30 ou 30' qui le comporte et alors que les chariots porte-fibres continue à exercer une tension sur les portions de fibre dans les zones de clivage en raison du profilage des cames 20, 20'.

Ces mouvements de translation des agencements de clivage 30, 30' vers l'agencement partagé 29 sont la conséquence de la rotation des cames 33, 33' entraînée par celle de l'arbre 13.

La traction axiale exercée sur chaque fibre par le chariot porte-fibre 14 ou 14' dans le dispositif porte-fibre 123 ou 123' duquel elle est immobilisée et la torsion exercée par ce dispositif se combinent avec la force due à l'impact d'un diamant sur cette fibre pour entraîner une rupture de cette fibre au niveau du point d'impact et un clivage en oblique par exemple sous un angle d'environ 5°. Comme connu, ce clivage oblique a pour objet une élimination des phénomènes de réflectance autrement susceptible d'intervenir lorsque la fibre sera raccordée en bout à une autre fibre identique ou optiquement compatible.

L'écartement des chariots porteurs 14, 14' cesse alors en raison du changement de profil prévu à cette fin sur les cames 20, 20' et les mors de serrage 38, 38' s'écartent du mors fixe 39 en raison de l'action de la came 35 entraînée par l'arbre 13 avec toutes les autres cames, comme précédemment, au cours d'une cinquième phase. L'écartement respectif de chacun des mors 38, 38' entraîne le passage d'une extrémité d'une des tiges 46 ou 46' au niveau où est susceptible de se trouver une portion de fibre qui était jusqu'alors immobilisée entre le mors fixe 39 et l'un des mors 38 ou 38' et que l'opération de rupture a séparée du reste de la fibre dont elle faisait partie. Cette portion de fibre est alors séparée du mors contre lequel elle était jusqu'alors appliquée, si elle n'était pas tombée du fait de son seul poids, cette chute étant alors entraînée par l'appui sur elle d'une extrémité de tige 46 ou 46'.

La poursuite de la rotation de l'arbre 13 entraîne alors le basculement du berceau 17 dans le bâti 12 de sa position haute à sa position basse sous l'action de la came 56. Elle conduit au positionnement du sous-ensemble 16 au niveau des fibres tel que déterminé par les dispositifs porte-fibres 123, 123', ces derniers basculant à leur position initiale par l'effacement des éléments en saillie 26, 26' du fait de la rotation de l'arbre 13 et de la came 20, 20'.

L'arrivée du sous-ensemble 16 en position basse se traduit par un positionnement du boîtier récepteur 1 du module d'épissure logé dans le porte-module 60 de l'outil de raccordement à un niveau pour lequel l'axe des orifices 5 d'introduction de fibre dudit boîtier 1 sont alignés avec l'axe de fibres défini par les dispositifs porte-fibres 123, 123'. Les extrémités clivées des deux fibres respectivement portées par ces dispositifs sont donc alignées chacune face à l'un des deux orifices 5 du boîtier récepteur 1.

Suite ou simultanément à cette sixième phase, la rotation de l'arbre 13 et plus particulièrement celle des cames 20, 20' entraîne un rapprochement des chariots porteurs 14, 14' vers le bâti, et en conséquence l'introduction dans les orifices 5 du boîtier récepteur 1 des extrémités clivées des deux fibres portées par les dispositifs porte-fibres 123, 123'.

Le profil des cames 20 et 20' est établi de manière connue de l'homme de métier pour que les extrémités clivées des deux fibres viennent s'appliquer l'une contre l'autre dans le boîtier récepteur 1, lorsque les deux chariots porteurs 14, 14' sont revenus à une distance déterminée de leur position initiale à proximité du bâti, sous l'action de ces cames.

Suite à cette septième phase, la poursuite de la rotation de l'arbre 13 conduit la came 74 à commander un appui simultané des poussoirs 69 sur les extrémités de l'élément immobilisateur 2 du module d'épissure en place dans la pièce réceptrice 62 du porte-module 60, en agissant sur le bras mobile 72 du dispositif de sertissage.

Cet élément immobilisateur 2 qui était jusqu'alors dans une première position par rapport au boîtier récepteur 1 du module qui les comporte de manière à permettre le passage de fibres entre lui-même et le fond de la cavité de ce boîtier récepteur 1, vient alors dans la seconde position prévue pour laquelle il maintient en place par pression les extrémités des fibres introduites dans la cavité évoquée ci-dessus via les orifices 5 ménagées aux extrémités de cette cavité.

Suite à cette huitième phase, la poursuite de la rotation de l'arbre 13 conduit les cames 27 et 27' solidaires de cet arbre à libérer les fibres de leur fixation sur les porte-fibres 123 et 123' par décrochage des brides 24 et 24' sous l'action des tiges 28, 28' qui sont associées à ces brides sur les talons que comportent ces dernières.

En dernier lieu, la rotation de l'arbre 13 dans une dernière phase de cycle d'épissurage amène la came 56 à remonter le berceau 17 en position haute ce qui se traduit par un retour en position initiale du porte-module 60 et une présentation du module d'épissure à l'état raccordé en position haute, celle-ci favorisant le retrait du module et éventuellement du porte-module 60.

L'outil de raccordement est alors à nouveau prêt pour un nouveau cycle.

Il doit être compris qu'il est possible d'utiliser un tel outil pratiquement sans autre modification qu'un changement de porte-module pour le raccordement de deux fibres à d'autres modules d'épissure compatibles avec celui décrit ici. Il est aussi possible d'utiliser un tel outil pour un raccordement n'impliquant la mise en oeuvre que d'une seule fibre, si besoin est, en particulier avec un minimum de modifications comprenant notamment un changement de porte-module par exemple pour relier une fibre à un embout connectique.

Par ailleurs, il est aussi à noter, en regard de la phase de clivage, que la coupe des fibres peut être à souhait rendue droite, au lieu d'être oblique, par suppression de la torsion appliquée sur la ou les fibres.

En outre l'outil décrit comme étant un outil double peut être transformé en un outil simple, par suppression d'une des deux parties symétriques selon l'axe XX' et conservation de la came centrale 35 précitée.

Bien entendu aussi, les différentes cames auront les profils adéquates pour ajuster la longueur de dénudage de la ou des fibres et réaliser le serrage et le clivage désirés.

## Revendications

1. Outil pour le raccordement en bout d'une fibre à une autre fibre ou à un élément de connectique optique, par l'intermédiaire d'un module comportant un boîtier récepteur permettant une introduction de fibre à au moins une extrémité et des moyens de fixation de fibre(s) par coincement en fond de boîtier qui sont mis en oeuvre par enfoncement, caractérisé en ce qu'il comporte des moyens (13, 14, 14', 15, 16) permettant de réaliser successivement et éventuellement de manière simultanée pour deux fibres, un dénudage partiel de chaque fibre, un clivage d'extrémité pour raccordement en bout, un positionnement de chaque fibre clivée dans le module où elle se raccorde, et un sertissage de chaque fibre en position de raccordement dans le module, en un cycle commandé par rotation continue de sens déterminé d'un arbre de commande (13) rotatif comporté par l'outil, après mise en place manuelle de chaque fibre et du module en des positions déterminées sur l'outil.

2. Outil de raccordement, selon la revendication 1, caractérisé en ce qu'il comporte un premier sous-ensemble de moyens (15) correspondant à des outils élémentaires de préparation de chaque extrémité de fibre à raccorder en bout, un second sous-ensemble de moyens (16) permettant la mise en position, le maintien et la manoeuvre du module de raccordement ou d'épissure, ces sous-ensembles sont étagés sur un même berceau support (17) monté basculant dans un bâti (12) de part et d'autre duquel sont montés des moyens porteurs (14, 14') pour chacun une fibre qui sont mobiles en translation dans des directions toujours opposées de part et d'autre du bâti sous l'action de cames principales (20, 20') fixées sur ledit arbre (13) mobile en rotation par rapport au bâti, ledit arbre étant entraîné en rotation par un organe de commande rotatif (11) que comporte l'outil et servant d'axe d'articulation au berceau support, ce dernier basculant par gravité et sous le contrôle d'une came de basculement (56) fixée sur l'arbre, d'une première position pour laquelle le premier sous-ensemble est au niveau de la ou des fibres que les moyens porteurs déterminent, à une seconde position pour lequel le module de raccordement ou d'épissure est mis en position au dit niveau de la ou des fibres que les moyens porteurs déterminent, ladite came de basculement actionnant ledit berceau support pour son basculement de la seconde à la première position.

3. Outil de raccordement, selon la revendication 2, caractérisé en ce que lesdits moyens porteurs sont réalisés sous la forme de deux chariots (14, 14') qui coulissent sur des tiges guides (18, 18') fixées sur le bâti de part et d'autre de ce dernier à l'encontre de ressorts de rappel (23, 23'), sous l'action des cames principales individuelles (20, 20') fixées sur l'arbre (13) de part et d'autre du bâti, chaque chariot portant un dispositif porte-fibre (123, 123'), monté mobile et articulé dans le chariot de manière à pouvoir partiellement tourner selon un axe parallèle aux tiges guides sous l'action d'un bras de mise en rotation (25, 25') prenant appui sur un élément en saillie latérale (26, 26') porté par la came principale par l'intermédiaire de laquelle le chariot portant ce dispositif porte-fibre est déplacé.

4. Outil de raccordement, selon la revendication 3, caractérisé en ce que chaque dispositif porte-fibre comporte une assise plane (123A), de part et d'autre de laquelle sont positionnés des vés de positionnement de fibre, et une bride de fixation (24, 24') articulée de fixation de fibre en position manuellement accrochable ; ladite bride étant mécaniquement décrochable par action d'une came de déverrouillage (27, 27') montée sur ledit arbre, et d'une tige (28, 28') venant prendre appui sur un talon de décrochage de cette bride.

5. Outil de raccordement, selon la revendication 2, caractérisé en ce que ledit premier sous-ensemble (15) comporte des moyens de serrage de fibre(s) (32) de part et d'autre desquels sont successivement alignés des moyens de dénudage pour une fibre (31, 31') et des moyens de clivage pour une fibre (30, 30'), ces différents moyens exploitant un même agencement partagé (29), monté fixe sur le berceau et portant des agencements mobiles (37, 37') correspondants respectivement à ces moyens de serrage, à ces moyens de dénudage et à ces moyens de clivage , ces agencements mobiles se déplaçant en translation à l'encontre de ressorts de rappel (45) sous l'action de cames individuelles de serrage, dénudage, clivage (35 ; 34, 34' ; 33, 33') fixées sur l'arbre (13) qui est entraîné en rotation par l'organe de commande rotatif de l'outil.

6. Outil de raccordement, selon la revendication 5, caractérisé en ce que lesdits moyens porteurs (14, 14'), dont les dispositifs porte-fibres (123, 123') assurent chacun le positionnement axial d'une fibre et une immobilisation locale de cette fibre, coopèrent avec les moyens de dénudage (31, 31') pour assurer un dénudage d'une portion de cette fibre par leur translation, et avec les moyens de clivage (30, 30') pour assurer un clivage d'extrémité de fibre par leur traction, alors que la fibre est maintenue en extrémité par les moyens de serrage (32) et par l'agencement partagé (29).

7. Outil de raccordement, selon l'une des revendications 2 à 6, caractérisé en ce que ledit second sous-ensemble (16) comporte des moyens de support (60) assurant un positionnement du module de raccordement (1,2) au niveau de l'axe de la ou des fibres déterminé par les moyens porteurs (14, 14'), pour permettre une insertion de fibre par translation dans le module, et des moyens de sertissage par poussoirs (69, 69') pour assurer le passage de l'élément immobilisateur (2) du module d'une première position où une introduction de fibre(s) dans le module est possible à une seconde position où des moyens de pression de l'élément immobilisateur sont poussés en fond de cavité de manière à immobiliser toute fibre située entre ce fond de cavité et eux-mêmes, lesdits moyens de sertissage étant actionnés par l'intermédiaire d'une came de sertissage (74) fixée sur l'arbre (13) qui est entraîné en rotation par l'organe de commande rotatif de l'outil.

8. Outil de raccordement, selon la revendication 7, caractérisé en ce qu'il comporte des moyens de support (60) pour un module de raccordement ou ledit élément de connectique, qui sont manuellement amovibles sur ledit second sous-ensemble (16).

9. Outil de raccordement, selon la revendication 5, caractérisé en ce que lesdits des moyens de serrage de fibre (32) comporte deux mors (38, 38') mobiles en translation par rapport à un mors (39) fixe et commun, auxquels sont associés de fines tiges rigides de dégagement de fibre (46, 46') qui sont respectivement solidaires soit de l'agencement (29) portant le mors fixe soit de l'agencement portant les mors mobiles, de manière à venir couper la trajectoire suivie par une portion de fibre éventuellement restée plaquée contre l'un des mors après clivage, lorsque le serrage est supprimé par retour des mors mobiles à une position initiale pour laquelle ils sont éloignés du mors fixe.

10. Outil de raccordement, selon la revendication 1, caractérisé en ce que ledit arbre (13) est entraîné par un organe de commande rotatif (11) manuel.

11. Outil de raccordement, selon la revendication 1, caractérisé en ce que ledit arbre (13) est entraîné par un moteur électrique.
